# EUROPÄISCHE PATENTSCHRIFT

(11) **EP 1 346 913 B1**
(45) Veröffentlichungstag und Bekanntmachung des Hinweises auf die Patenterteilung: **31.08.2005**
(21) Anmeldenummer: 03006044.6
(22) Anmeldetag: 19.03.2003
(51) Int. Cl.: B64D 13/00

(54) **Luftauslassvorrichtung für Fahrzeuge, insbesondere Flugzeuge, und Verfahren zum Zusammenbau einer Luftauslassvorrichtung**
Outlet nozzle for vehicles, in particular aircraft, and its fabricating method
Sortie d'air pour véhicules, notament pour aéronefs, et son procédé de fabrication

(30) Priorität: 22.03.2002 EP 02006437
(43) Veröffentlichungstag der Anmeldung: 24.09.2003
(73) Patentinhaber: Goodrich Hella Aerospace Lighting Systems GmbH, 59557 Lippstadt (DE)
(72) Erfinder: Brölemann, Rolf, 33154 Salzkotten (DE); Finke, Christian, 33647 Bielefeld (DE); Kessler, Thomas, 59590 Geseke (DE); Pieper, Udo, 59597 Erwitte (DE)
(74) Vertreter: Hilleringmann, Jochen

(56) Entgegenhaltungen:
- DE-U- 1 945 095
- US-A- 2 516 805

## Beschreibung

Die Erfindung betrifft eine Luftauslassvorrichtung für Fahrzeuge, insbesondere Flugzeuge, zum Belüften eines Sitzplatzes und insbesondere eine Montagehilfe für den Zusammenbau einer Luftauslassvorrichtung. Ferner betrifft die Erfindung ein Verfahren zum Zusammenbau einer solchen Luftauslassvorrichtung.

Insbesondere in Flugzeugen und Reisebussen werden Luftauslassvorrichtungen eingesetzt, um Sitzplätze - zumeist von oben - zu belüften. Damit kann der Passagier die Frischluftzufuhr für seinen Sitzplatz individuell einstellen. Beispiele für derartige Luftauslassvorrichtungen sind in DE-A-36 26 790, DE-A-23 47 541, DE-U-1 945 095, welche als nächstliegender Stand der Technik betrachtet wird und US-A-2 516 805 beschrieben.

Bei dem Zusammenbau einer Luftauslassvorrichtung hat es sich als problematisch erwiesen, die Blende der Luftauslassvorrichtung wirklich dicht mit dem meist in Form eines Kugelgelenkes innerhalb der Blende angeordneten Luftauslass zu verbinden. Bislang existieren zwei Verfahren zur Befestigung des eine Luftdüse mit einem Halter für diese aufweisenden Luftauslasses in der Blende. Entweder werden die Halter mittels eines Schraubringes in einer Aufnahmeöffnung der Blende befestigt, was jedoch aufwendig ist, da dafür ein zusätzliches Element, nämlich der Schraubring, benötigt wird. Hinzu kommt, dass die Montage deshalb relativ aufwendig ist. Des Weiteren kann die Verbindung mit einem Schraubring niemals vollständig luftdicht sein. Deshalb eignen sich geschraubte Luftauslassvorrichtungen nicht für eine Versorgung durch sogenannte Luftverteilerboxen, die eine Vielzahl von Luftauslassvorrichtungen ständig mit strömender Frischluft versorgen, da bedingt durch geringfügige Undichtigkeiten des Schraubringes ständig ein gewisser Luftstrom aus der Luftauslassvorrichtung austreten würde.

Eine zweite Möglichkeit zum Zusammenbau der Luftauslassvorrichtungen besteht darin, den Halter des Luftauslasses in der Aufnahmeöffnung der Blende zu verkleben. Diese geklebten Luftauslassvorrichtungen sind zwar dicht, d.h. es treten keine unerwünschten Luftströme aus, sie haben jedoch Nachteile bei der Fertigung. Nachdem bei der Herstellung der Kleber aufgetragen und der Luftauslass in die Aufnahmeöffnung der Blende eingesetzt wurde, muss der Kleber aushärten. Während dieser Aushärtezeit müssen die Luftauslassvorrichtungen ruhig gestellt werden, damit die miteinander verklebten Teile (Halter und Blende) während des Aushärtens ihre Position beibehalten. Andernfalls kann es zu unerwünschten Luftspalten kommen. Da die Luftauslassvorrichtungen für die Aushärtezeit dem Herstellungsprozess entzogen sind, verlängert sich die Produktionszeit unerwünschterweise entsprechend.

Der Erfindung liegt die Aufgabe zu Grunde, eine Luftauslassvorrichtung zu verbessern und deren Herstellung zu vereinfachen.

Zur Lösung dieser Aufgabe wird mit der Erfindung eine Luftauslassvorrichtung für Fahrzeuge vorgeschlagen, die versehen ist mit den Merkmalen des Anspruchs 1. Ferner wird zur Lösung der Aufgabe ein Verfahren mit den in Anspruch 7 angegebenen Schritten vorgeschlagen. Die Unteransprüche betreffen einzelne Ausgestaltungen der Erfindung. Die Erfindung schlägt vor, zum Befestigen des Luftauslasses an der Blende ein als Rastvorrichtung zum selbsttätigen rastenden Verriegeln von Blende und Luftauslass ausgebildeten Sicherungsmittel zu verwenden, das an der Blende und/oder dem Luftauslass befestigt ist. Bei dem Zusammenbau der Luftauslassvorrichtung wird nach dem Aufbringen eines Dichtmittels auf die Blende der Luftauslass derart auf die Blende aufgebracht, dass sich das Dichtmittel zwischen der Blende und dem Halter des Luftauslasses befindet. Das Sicherungsmittel hält nun den Halter der Luftdüse des Luftauslasses in der gewünschten Position bezüglich der Blende. Dank des Sicherungsmittels können als Dichtmittel aushärtbare Kleber eingesetzt werden, ohne dass der Herstellungsprozess während der Aushärtezeit unterbrochen werden muss, da das Sicherungsmittel den Halter des Luftauslasses ständig in einer definierten unveränderten Position zu der Blende hält.

Da das Sicherungsmittel an der Blende und/oder dem Luftauslass ausgebildet ist, kann es kostengünstig ohne die Notwendigkeit der Fertigung und Montage eines zusätzlichen Teils hergestellt werden. Auch die Montage der Luftauslassvorrichtung gestaltet sich sehr einfach, da das Sicherungsmittel sozusagen integriert ist und keine besonderen Bauteile benötigt werden.

Vorzugsweise ist das Sicherungsmittel als eine Art Bajonettverschluss ausgebildet. Dazu sind an der Blende mindestens zwei Aufnahmeaussparungen angeordnet und die Umfangsfläche des Halters weist mindestens zwei zum Eingriff in die Aufnahmeaussparung vorgesehene Vorsprünge auf. Die Vorsprünge werden mittels einer Drehbewegung in die Aufnahmeaussparungen eingedreht. Im Bereich der Aufnahmeaussparung ist eine Arretierung vorgesehen, welche den Halter des Luftauslasses bei einer fortgesetzten Drehbewegung in der Blende fixiert. Diese Arretierung verhindert, zumindest bis zu einer gewissen Kraft, dass sich der Halter durch Zurückdrehen aus der Blende lösen kann. Mit diesem Sicherungsmittel in Form eines Bajonettverschlusses kann der Luftauslass mit einer einfachen Drehbewegung dauerhaft an der Blende befestigt werden.

Alternativ kann das Sicherungsmittel in axialer Richtung rastbar sein. Die axiale Richtung bezieht sich hier auf die Aufnahmeöffnung, fällt also mit dem Weg der ausströmenden Luft zusammen. Bei dieser Ausbildung des Sicherungsmittels ist die Montage der Luftauslassvorrichtung noch einfacher, da auf die Drehbewegung verzichtet werden kann und der Luftauslass auf geradem Weg in axialer Richtung der Aufnahmeöffnung in dieser eingesteckt werden kann.

Allgemein gesagt ist das Sicherungselement also zweckmäßigerweise als Rastvorrichtung ausgebildet.

Da das Sicherungsmittel den Halter des Luftauslasses und die Blende in einer festen Position zueinander und mit einem gewissen Abstand voneinander hält, können auch elastische Dichtmittel, wie beispielsweise ein elastomerer Dichtring, eingesetzt werden, welche eine gewisse Vorspannung zum Abdichten benötigen.

Im Folgenden wird ein Ausführungsbeispiel der Erfindung anhand der Zeichnungen näher erläutert. Es zeigen:
- Fig. 1: eine Seitenansicht der erfindungsgemäßen Luftauslassvorrichtung mit mehreren Luftauslässen;
- Fig. 2: eine vergrößerte Seitenansicht während der Montage eines Luftauslasses und
- Fig. 3: eine Draufsicht auf die Luftauslassvorrichtung.

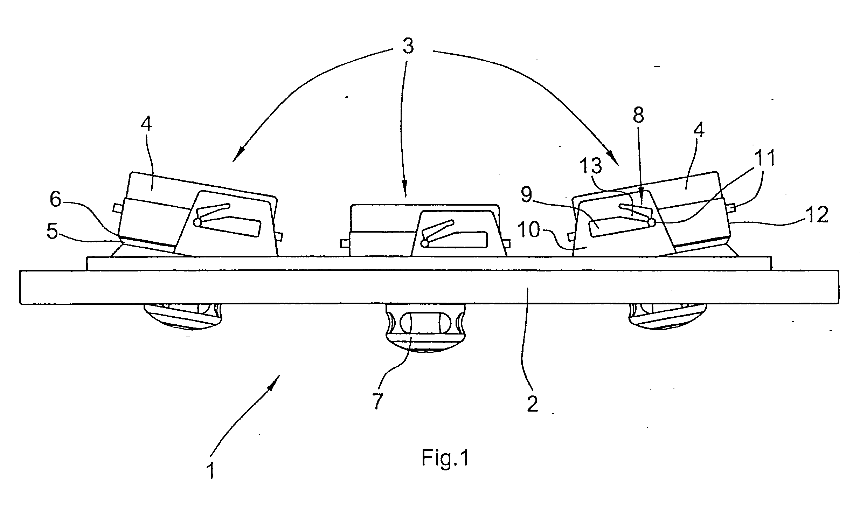

In Fig. 1 ist eine erfindungsgemäße Luftauslassvorrichtung 1 in Seitendarstellung gezeigt. Die Luftauslassvorrichtung 1 hat eine Blende 2, die in diesem Ausführungsbeispiel drei Luftauslässe 3 aufnimmt. Anstatt drei Luftauslässe 3 vorzusehen, ist es auch möglich, lediglich einen oder zwei Luftauslässe 3 oder eine andere Anzahl vorzusehen.

Die Blende 2 wird üblicherweise oberhalb von Sitzplätzen in die Innenverkleidung eines Fahrzeuges, wie eines Flugzeuges oder Reisebusses, eingesetzt. Derartige Blenden 2 können aber beispielsweise auch in Armaturenbretter eingebaut werden.

Jeder Luftauslass 3 weist einen im wesentlichen rohrförmigen Halter 4 auf, der auf einem Öffnungsrand 5 der Blende 1 aufliegt. Zwischen dem Halter 4 des Luftauslasses 3 und dem Rand 5 der Blende 1 befindet sich ein Dichtmittel 6, beispielsweise ein aushärtbarer Kleber oder ein elastomerer Dichtring. In dem Halter 4 ist mittels eines hier nicht gezeigten Kugelgelenks eine Düse 7 angeordnet, deren Öffnungsgrad mittels einer Drehbewegung einstellbar ist. Die Düse 7 ragt durch eine nicht dargestellte Aufnahmeöffnung der Blende 2 hindurch, so dass der Passagier mittels der Düse 7 Richtung und Stärke des Luftstromes bestimmen kann.

Der dem Passagier zugeführte Luftstrom wird über nicht dargestellte Leitungen oder Kanäle den Haltern 4 der Luftauslässe 3 zugeführt, passiert den Halter 4 und tritt durch die Düse 7 aus. Der Übergang zwischen dem Luftauslass 3 und der Blende 2 wird durch das Dichtmittel 6 luftdicht verschlossen. Das nicht gezeigte Kugelgelenk dichtet die Düse 7 innerhalb des Halters 4 ab.

Der Luftauslass 3 ist mit einem Sicherungsmittel 8 in der Blende 2 befestigt. Das Sicherungsmittel 8 umfasst mehrere (in diesem Fall zwei) nutförmige Aussparungen 9, die in einem Wandabschnitt 10 der Blende 2 ausgenommen ist, und Vorsprüngen 11, die an einer Umfangsfläche 12 des Halters 4 des Luftauslasses 3 angeordnet sind. Die Aufnahmeaussparungen 9 und die Vorsprünge 11 sind mit gleichem Abstand zur Blende 2 angeordnet, so dass die Vorsprünge 11 in die Aufnahmeaussparungen 9 eingreifen können. An einem Ende jeder Aufnahmeaussparung 9 ist eine Arretierungszunge 13 vorgesehen, die hinter dem Vorsprung 11 einrastet und den Luftauslass 3 an der Blende 2 fixiert.

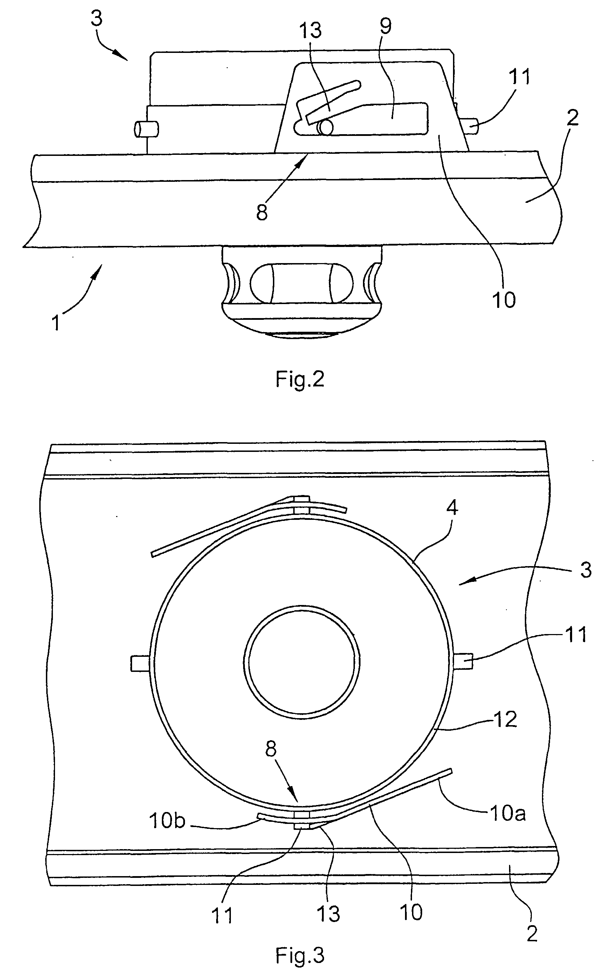

Im Folgenden wird das Sicherungsmittel 8 anhand der Fign. 2 und 3 näher beschrieben.

Der Wandabschnitt 10 der Blende 2 verläuft zunächst tangential zu der Umfangsfläche 12 des Luftauslasses 3 und damit auch zu der nicht gezeigten Aufnahmeöffnung der Blende 2, in der sich der Luftauslass 3 befindet. Die Aufnahmeaussparung 9 beginnt in dem tangentialen Bereich 10a des Wandabschnittes 10 und setzt sich fort bis in einen radialen Bereich 10b des Wandabschnittes 10, dessen Radius dem der Umfangsfläche 4 entspricht. So kann mittels einer Drehbewegung des Luftauslasses 3 der Vorsprung 11 in dem tangentialen Bereich 10a allmählich in die Aufnahmeaussparung 9 eingreifen, wobei der Vorsprung 11 im radialen Bereich 10b vollständig in die Aufnahmeaussparung 9 eingreift. Der Wandabschnitt 10 ist so weit von der Umfangsfläche 4 beabstandet, dass eine Drehung des Luftauslasses 3 problemlos möglich ist, jedoch nahe genug, dass der Vorsprung 11 die Aufnahmeaussparung 9 durchstößt, d.h. den Wandabschnitt 10 auf der dem Luftauslass 3 abgewandten Seite überragt. Am Ende der Aufnahmeaussparung 9 im radialen Bereich 10b ist die Arretierungszunge 13 angeordnet. Die Arretierungszunge 13 ist in dem Wandabschnitt 10 derart ausgebildet, dass sie eine Vorspannung in Richtung der Blende 2 hat. Während des Drehens des Luftauslasses 3 (Fig. 2) biegt der Vorsprung 11 die Arretierungszunge 13 zunächst nach oben, so dass der Vorsprung 11 die Arretierungszunge 13 passieren kann. Die Länge der Arretierungszunge 13 ist derart bemessen, dass, wenn der Vorsprung 11 am äußersten Ende der Aufnahmeaussparung 9 angelangt ist, die Arretierungszunge 13 nicht mehr auf dem Vorsprung 11 aufliegt, und somit auf Grund der Vorspannung hinter dem Vorsprung 11 einrastet und damit den Luftauslass 3 fixiert.

Der Luftauslass 3 ist gegen unbeabsichtigtes Lösen gesichert, da die Arretierungszunge 13 nur mit einer gewissen Kraft überwunden werden kann. Die Arretierungszunge 13 ist in Verlängerung des tangentialen Bereiches 10a ausgebildet (Fig. 3), so dass sie seitlich neben dem radialen Bereich 10b liegt. Dies hat zur Folge, dass die Arretierungszunge 13 nahe am Ende des Vorsprungs an diesem angreift. Bei einem Herausdrehen des Luftauslasses 3 kann die Arretierungszunge 13 deshalb sowohl nach oben, d.h. von der Blende 2 weg, als auch nach außen, d.h. von dem Luftauslass 3 weg, ausweichen. Alternativ kann die Arretierungszunge 13 natürlich auch im radialen Bereich 10b ausgebildet sein, so dass sie mit dem radialen Bereich 10b des Wandabschnittes 10 fluchtet.

In dem beschriebenen Ausführungsbeispiel sind zwei Wandabschnitte 10 mit jeweils einer Aufnahmeaussparung 9 sowie vier Vorsprüngen 11 an dem Luftauslass 3 vorhanden. Zur Erhöhung der Stabilität könnten auch mehrere Aufnahmeaussparungen 9 vorgesehen werden. Bei vier Vorsprüngen 11 ist maximal eine viertel Drehung des Luftauslasses 3 erforderlich, bis dieser an der Blende 2 fixiert ist. Durch Erhöhen der Anzahl der Vorsprünge 11 kann dieser Weg reduziert werden. Denkbar ist aber jegliche Kombination bei der Anzahl von Aufnahmeaussparungen 9 und Vorsprüngen 11.

Bei der Herstellung der Luftauslassvorrichtung 1 wird auf die Ränder 5 der Blende 2 ein Klebemittel (Dichtmittel 6) aufgebracht und danach werden die Luftauslässe 3 an der Blende 2 befestigt. Dazu wird ein Luftauslass 3 auf den Rand 5 aufgesetzt und zwar so, dass keiner der Vorsprünge 11 durch Aufsetzen an einem der Wandabschnitte 10 die vollständige Auflage des Luftauslasses 3 auf dem Rand 5 behindert. Nun wird der Luftauslass 3 im Uhrzeigersinn gedreht, wobei die Vorsprünge 11 in die Aufnahmeaussparungen 9 eingreifen. Der Luftauslass 3 wird so weit gedreht, bis die Vorsprünge 11 an das Ende der Aufnahmeaussparung 9 stoßen, so dass die Arretierungszungen 13 hinter den Vorsprüngen 11 einrasten können. Dadurch wird der Luftauslass 3 in einer definierten Position auf dem Rand 5 der Blende 2 gehalten. Anschließend kann die Luftauslassvorrichtung 1 sofort weiterverarbeitet werden, unabhängig davon, ob ein aushärtbares Dichtmittel 6 gewählt wurde. Denn ein aushärtbares Dichtmittel 6 kann jetzt auch während der weiteren Verarbeitung aushärten, da das Sicherungsmittel 8 den Luftauslass 3 ständig in einer festen Position hält. Trotz der Sicherung des Luftauslasses 3 an der Blende 2 ist der Zusammenbau der Luftauslassvorrichtung 1 sehr einfach. Wie bei einem Bajonettverschluss muss der Luftauslass 3 lediglich in die Aufnahmeöffnung der Blende 2 eingesetzt werden und muss dann nur noch gedreht werden, bis die Arretierungszungen 13 hinter den Vorsprüngen 11 einrasten.

## Patentansprüche

1. Luftauslassvorrichtung für Fahrzeuge, insbesondere für Flugzeuge, mit
- einer Blende (2) mit mindestens einer Aufnahmeöffnung,
- einem Luftauslass (3), der einen in der Aufnahmeöffnung angeordneten Halter (4) und eine von diesem gehaltene Luftdüse (7) aufweist,
- einem den Halter (4) und die Blende (2) gegeneinander abdichtenden Dichtmittel (6), und
- einem Sicherungsmittel (8) an der Blende (2) und/oder dem Halter (4) zum Sichern des Luftauslasses (3) an der Blende (2) gegen unbeabsichtigte Relativbewegungen,
**dadurch gekennzeichnet,**
- **dass** das Sicherungsmittel (8) mindestens eine Rastvorrichtung zum selbsttätigen rastenden Verriegeln von Blende (2) und Luftauslass (3) aufweist.

2. Luftauslassvorrichtung nach Anspruch 1, **dadurch gekennzeichnet, dass** das Sicherungsmittel (8) mindestens zwei an der Blende (2) angeordnete Aufnahmeaussparungen (9), mindestens ein Arretierelement (13) und mindestens zwei an einer Außenfläche (12) des Halters (4) angeordnete Vorsprünge (11) zum Eintauchen in die Aufnahmeaussparungen (9) aufweist, wobei die Vorsprünge (11) durch Verdrehen des Luftauslasses (3) in einer ersten Drehrichtung in den Aufnahmeaussparungen (9) in einer Verriegelungsposition festlegbar sind und wobei mindestens einer der Vorsprünge (11) in der Verriegelungsposition gegen ein Zurückverdrehen des Luftauslasses (3) gesichert ist.

3. Luftauslassvorrichtung nach Anspruch 1 oder 2, **dadurch gekennzeichnet, dass** das Dichtmittel (6) ein Dichtring ist.

4. Luftauslassvorrichtung nach einem der Ansprüche 1 bis 3, **dadurch gekennzeichnet, dass** das Dichtmittel (6) ein Kleber ist.

5. Luftauslassvorrichtung nach Anspruch 4, **dadurch gekennzeichnet, dass** der Kleber ein aushärtender Kleber ist.

6. Luftauslassvorrichtung nach einem der Ansprüche 1 bis 5, **dadurch gekennzeichnet, dass** die Luftdüse (7) verschwenkbar in dem Halter (4) angeordnet ist.

7. Verfahren zum Zusammenbau einer Luftauslassvorrichtung (1) bestehend aus einer Blende (2), einem Luftauslass (3) und einem den Luftauslass (3) gegen die Blende (2) abdichtenden Dichtmittel (6) mit den folgenden Schritten:
- Aufbringen des Dichtmittels (6) an der Blende (2) und/oder an dem Luftauslass (3),
- Anbringen des Luftauslasses (3) an der Blende (2) und
- Sichern des Luftauslasses (3) an der Blende (2) gegen unbeabsichtigte Relativbewegungen von Luftauslass (3) und Blende (2) mit Hilfe eines Sicherungsmittels (8) an der Blende (2) und/oder dem Luftauslass (3), wobei das Sicherungsmittel (8) mindestens eine Rastvorrichtung zum selbsttätigen rastenden Verriegeln von Blende (2) und Luftauslass (3) aufweist.

## Claims

1. Air outlet device for vehicles, in particular airplanes, comprising
a panel (2) with at least one receiving opening,
an air outlet (3) comprising a holder (4) arranged in the receiving opening and an air nozzle (7) held thereby, and
a sealing means (6) sealing the holder (4) and the panel (2) against each other,
a securing means (8) for securing the air outlet (3) at the panel (2) against unintentional relative movements which is configured at the panel (2) and/or the holder,
**characterized in**
**that** the securing means comprises at least one locking device for the automatic locking latching of panel (2) and air outlet (3).

2. Air outlet device according to claim 1, **characterized in that** the securing means (8) comprises at least two receiving recesses (9) arranged at the panel (2), at least one lock element (13), and at least two projections (11) arranged at an outer surface (12) of the holder (4), for immersing into the receiving recesses (9), the projections (11) being fixable in a latching position in the receiving recesses (9) by twisting the air outlet (3) in a first rotational direction, and at least one of the projections (11) being secured in the latching position against the air outlet (3) being twisted back.

3. Air outlet device according to claim 1 or 2, **characterized in that** the sealing means (6) is a sealing ring.

4. Air outlet device according to one of claims 1 to 3, **characterized in that** the sealing means (6) is an adhesive.

5. Air outlet device according to claim 4, **characterized in that** the adhesive is a curing adhesive.

6. Air outlet device according to one of claims 1 to 5, **characterized in that** the air nozzle (7) is pivotally arranged in a holder (4).

7. Method for assembling an air outlet device (1) being comprised of a panel (2), an air outlet (3), and a sealing means (6) sealing the air outlet (3) against the panel (2), with the following steps:
applying the sealing means (6) to the panel (2) and/or the air outlet,
attaching the air outlet (3) to the panel (2), and
securing the air outlet (3) at the panel (2) against unintentional relative movements of air outlet and panel by means of a securing means (8) of the panel (2) and/or the air outlet (3), the securing means (8) comprising at least one locking device for the automatic locking latching of panel (2) and air outlet (3).

## Revendications

1. Dispositif de sortie d'air pour véhicules, notamment pour aéronefs, comprenant
- un cadre (2) avec un moins une ouverture de réception,
- une sortie d'air (3) qui présente un support (4) disposé dans l'ouverture de réception ainsi qu'une buse d'air (7) tenue par celui-ci,
- un moyen d'étanchéité (6) étanchant le support (4) et le cadre (2) l'un par rapport à l'autre, et
- un moyen de blocage (8) sur le cadre (2) et/ou le support (4) pour bloquer la sortie d'air (3) sur le cadre (2) contre des mouvements relatifs involontaires,
**caractérisé en ce que** le moyen de blocage (8) présente au moins un dispositif d'arrêt pour un verrouillage encliqueté automatique du cadre (2) et de la sortie d'air (3).

2. Dispositif de sortie d'air selon la revendication 1,
**caractérisé en ce que** le moyen de blocage (8) présente au moins deux évidements de réception (9) disposés sur le cadre (2), au moins un élément d'arrêt (13) et au moins deux ergots (11) disposés sur une face extérieure (12) du support (4) pour plonger dans les évidements de réception (9), dans lequel les ergots (11) peuvent être immobilisés dans les évidements de réception (9) dans une position de verrouillage par la rotation de la sortie d'air (3) dans un premier sens de rotation, et au moins l'un des ergots (11) est bloqué dans la position de verrouillage par rapport à une rotation en sens inverse de la sortie d'air (3).

3. Dispositif de sortie d'air selon la revendication 1 ou 2,
**caractérisé en ce que** le moyen d'étanchéité (6) est une bague d'étanchéité.

4. Dispositif de sortie d'air selon l'une quelconque des revendications 1 à 3,
**caractérisé en ce que** le moyen d'étanchéité (6) est une colle.

5. Dispositif de sortie d'air selon le revendication 4,
**caractérisé en ce que** la colle est une colle durcissante.

6. Dispositif de sortie d'air selon l'une quelconque des revendications 1 à 5,
**caractérisé en ce que** la buse d'air (7) est disposée de manière pivotante dans le support (4).

7. Procédé d'assemblage d'un dispositif de sortie d'air (1), comprenant un cadre (2), une sortie d'air (3) et un moyen d'étanchéité (6) étanchant la sortie d'air (3) par rapport au cadre (2), avec les étapes suivantes :
- application du moyen d'étanchéité (6) sur le cadre et/ou la sortie d'air (3),
- mise en place de la sortie d'air (3) sur le cadre (2), et
- blocage de la sortie d'air (3) sur le cadre (2) contre des mouvements relatifs involontaires de la sortie d'air (3) et du cadre (2) à l'aide d'un moyen de blocage (8) sur le cadre (2) et/ou la sortie d'air (3), le moyen de blocage (8) présentant au moins un dispositif d'arrêt pour un verrouillage encliqueté automatique du cadre (2) et de la sortie d'air (3).
